# EUROPEAN PATENT APPLICATION

(11) **EP 4 219 580 A1**
(43) Date of publication of application: **02.08.2023**
(21) Application number: 22153603.0
(22) Date of filing: 27.01.2022
(51) Int. Cl.: C08G 18/32, B32B 7/12, C08G 18/48, C08G 18/75, C08G 18/78, C09J 175/08

(54) **SOLVENT-BASED POLYURETHANE ADHESIVE COMPOSITION FOR BONDING FLEXIBLE PACKAGING MATERIAL**

(71) Applicant: Henkel AG & Co. KGaA, 40589 Düsseldorf (DE)
(72) Inventor: Franken, Marcel, 53819 Neunkirchen-Seelscheid (DE); Kalmer, Henrik, 27729 Vollersode (DE); Wilkens, Pascal, 48734 Reken (DE)

(57) **Abstract**

The present invention relates to a solvent-based polyurethane adhesive composition for bonding flexible packaging materials, which is debondable by treating with water or an aqueous solution. Further, the present invention relates to method of manufacturing the flexible packaging material by using the solvent-based polyurethane adhesive composition and a method of recycling the flexible packaging materials.

## Description

### Technical Fields

The present invention relates to a solvent-based polyurethane adhesive composition for bonding flexible packaging materials, which is debondable by treating with water or an aqueous solution. Further, the present invention relates to method of manufacturing the flexible packaging material by using the solvent-based polyurethane adhesive composition and a method of recycling the flexible packaging materials.

### Background

Product packaging has been changing from sealed metal cans and glass bottles to sealed flexible packages such as pouches. As one example animal or human food is now available in both traditional metal cans and flexible pouches. The flexible package when filled with a food or other product and closed or sealed can be readily changed in shape. The flexible package is typically prepared from two layers of flexible packaging material that are overlaid and sealed around most of their periphery to form a cavity inside. Typically, the two layers of flexible packaging material are heat sealed by applying heat and pressure to fuse the layers together around a thin portion of the package periphery. Food or other product is placed in the cavity through an opening and the opening is closed by heat sealing the layers together. The sealed package and enclosed product can be heated for preservation purposes.

Flexible packaging material is prepared by laminating two or more layers of film. Each layer of the flexible packaging material is bonded to the adjacent layer by an adhesive. Adhesive can be applied to the layer from a solution in a suitable solvent using gravure or smooth roll coating cylinders or from a solvent-free state using special application machinery and that layer is laminated to another layer. The laminated packaging material is dried if necessary and accumulated in rolls. The rolls are kept in storage for a predetermined amount of time to allow the adhesive to cure before use in some applications.

Although there are many possible types of adhesives, polyurethane based adhesives are preferred for use in flexible packaging materials because of their many desirable properties including good adhesion to the materials in each layer, high bonding strength, resistance to heat such as from heat sealing or retorting, and resistance to chemically aggressive products.

Until today, flexible packing material bonded by adhesives are hardly to recycle. Most of the produced flexible packaging materials end up in the energetic utilization such as burning or using the heat of combustion to gain electric energy. Due to the climatic change and therefore the occurring need for a circular economy, recycling of flexible packaging material itself without energetic utilization is necessary. The used materials for flexible packaging are mainly the film laminates and thus the film laminate has priority compared to the recycling of the adhesives. The recycling and sorting of the film laminates is unfortunately not possible when different types of films such as aluminium, PET, PE, etc. are bonded together by an adhesive.

US 6,870,006 B2 discloses a water-soluble hotmelt adhesive, containing: 40 to 70% by weight of at least one homopolymer or copolymer with free carboxylic acid groups based on ethylenically unsaturated monomers (component A), 15 to 45% by weight of at least one water-soluble or water-dispersible polyurethane (component B), 10 to 45% by weight of at least one inorganic or organic base (component C), and 0 to 20% by weight of further additives (component D), wherein the sum of such components is 100% by weight. The water-soluble hotmelt adhesive is suitable for producing textile laminates, moisture-tackifiable papers and at least two-ply hygiene-papers, in particular tissue.

Therefore, it would be desirable to provide a polyurethane adhesive composition that has sufficient adhesion profile for bonding flexible packaging materials after curing, meanwhile it is debondable in energy saving and environmentally friendly method.

### Summary of the invention

A first object of the invention is to provide a solvent-based polyurethane adhesive composition comprising,
1) a polyurethane polymer obtainable by the reactants comprising,
   a) a polyisocyanate selected from an aliphatic polyisocyanate, alicyclic polyisocyanate and combination thereof; and
   b) a mixture of isocyanate-reactive compounds comprising,
      b1) a polyether polyol; and
      b2) an amine represented by Formula (1) 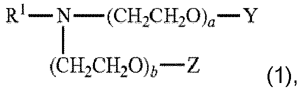 wherein R¹ is C₁₋₃ alkyl, Y is hydrogen, Z is C₁₋₃ alkyl or hydrogen, a is an integer of 1 to 5, and b is an integer of 0 to 5; and
2) an organic solvent.

Another object of the invention is to provide a flexible packaging material comprising a first layer comprised of a first polyolefin or first polyester; a second layer comprised of a second polyolefin, which may be the same or different from the first polyolefin, a second polyester, which may be the same as or different from the first polyester, or a metal foil; and cured adhesive of the adhesive composition according to the present invention bonding the first layer to the second layer.

Yet another object of the invention is to provide a method of recycling a flexible packaging material comprising,
a) providing a flexible packaging material according to the present invention,
b) treating the flexible packaging material with water or water/ethanol solution under atmospheric conditions for 1 to 24 hours, and
c) obtaining the debonded first and second layers.

### Brief description of the drawing

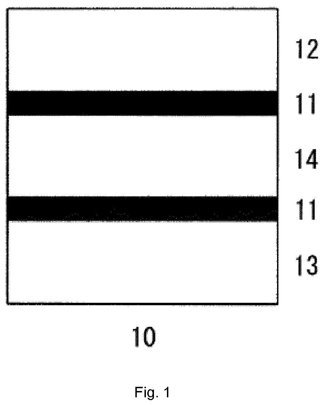

Figure 1 shows a sectional view of a food packaging material according to the present invention.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

Unless otherwise defined, all terms used in the disclosing the invention, including technical and scientific terms, have the meaning as commonly understood by one of the ordinary skilled in the art to which this invention belongs to. By means of further guidance, term definitions are included to better appreciate the teaching of the present invention.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or process steps.

The recitation of numerical end points includes all numbers and fractions subsumed within the respective ranges, as well as the recited end points.

All references cited in the present specification are hereby incorporated by reference in their entirety.

If reference is made herein to a molecular weight of a polymer, this reference refers to the average number weight Mₙ, unless stated otherwise. The number average molecular weight Mₙ of a polymer can, for example, be determined by gel permeation chromatography (GPC) according to DIN 55674 with THF as the eluent. If not stated otherwise, all given molecular weights are those determined by GPC, calibrated with polystyrene standards. The average molecular weight M_{w} can also be determined by GPC, as described for Mₙ.

"Atmospheric conditions" refers to conditions at a temperature of 25°C and pressure of 101.325 kPa.

The disclosed polyurethane adhesive composition comprises
1) a polyurethane polymer obtainable by the reactants comprising,
   a) a polyisocyanate selected from an aliphatic polyisocyanate, alicyclic polyisocyanate and combination thereof; and
   b) a mixture of isocyanate-reactive compounds comprising,
      b1) a polyether polyol; and
      b2) an amine represented by Formula (1) 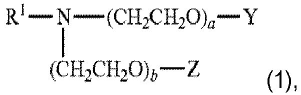 wherein R¹ is C₁₋₃ alkyl, Y is hydrogen, Z is C₁₋₃ alkyl or hydrogen, a is an integer of 1 to 5, and b is an integer of 0 to 5; and
2) an organic solvent.

### Polyisocyanate

Polyisocyanate is used to react with isocyanate-reactive compounds to produce the polyurethane polymer for the adhesive composition according to the present invention.

Polyisocyanate refers to any organic compound containing two or more isocyanate groups. In the present invention, the polyisocyanate selected from an aliphatic polyisocyanate, alicyclic polyisocyanate and combination thereof.

As used herein, the "aliphatic polyisocyanate" means a monomer or oligomer which has a chain-like hydrocarbon chain to which an isocyanate group is directly bonded, and also has no cyclic hydrocarbon chain. The "aliphatic isocyanate" may have an aromatic ring, but the isocyanate group is not bonded directly to the aromatic ring. Furthermore, as used herein, the cyclic hydrocarbon chain does not contain aromatic rings.

The "alicyclic polyisocyanate" means a monomer or oligomer which has a cyclic hydrocarbon chain, and may have a chain-like hydrocarbon chain. The isocyanate group may be directly bonded to the cyclic hydrocarbon chain, or may be directly bonded to a chain-like hydrocarbon chain which may be present. Although the "alicyclic polyisocyanate" may have an aromatic ring, the isocyanate group is not directly bonded to the aromatic ring.

Therefore, for example, 4,4'-diphenylmethane diisocyanate corresponds to the aromatic polyisocyanate, since the isocyanate group is directly bonded to the aromatic ring. On the other hand, for example, xylylene diisocyanate corresponds to the aliphatic polyisocyanate, although it has an aromatic ring, since the isocyanate group is not directly bonded to the aromatic ring and is bonded to the methylene group. The aromatic ring may have a ring-fused structure in which two or more benzene rings are condensed.

Examples of the aliphatic polyisocyanate include 1,2-ethylene diisocyanate, 1,4-tetramethylene diisocyanate, 1,6-hexamethylene diisocyanate (HDI), 2,2,4(2,4,4)-trimethyl-1,6-hexamethylene diisocyanate (TMDI), 1,9-diisocyanato-5-methylnonane, 1,8-diisocyanato-2,4-dimethyloctane, 1,12-dodecane diisocyanate, ω,ω'-diisocyanatodipropyl ether, 3-isocyanatomethyl-3,5,5-trimethylcyclohexyl isocyanate (isophorone diisocyanate, IPDI), 1,4-diisocyanatomethyl-2,3,5,6-tetramethylcyclohexane, 2-methyl-1,5-diisocyanatopentane (MPDI), 2-ethyl-1,4-diisocyanatobutane, 1,10-diisocyanatodecane, 1,5-diisocyanatohexane, 1,3-diisocyanatomethylcyclohexane, 1,4-diisocyanatomethylcyclohexane, xylyl diisocyanate (XDI), tetramethylxylyl diisocyanate (TMXDI), methyl 2,6-diisocyanatohexanoate (lysine diisocyanate), and the dimer or trimer thereof, such as IPDI trimer and HDI trimer.

Examples of the alicyclic polyisocyanate include 5-isocyanato-1-isocyanatomethyl-1,3,3-trimethylcyclohexane (isophorone diisocyanate), 1,3-bis(isocyanatomethyl)cyclohexane (hydrogenated xylylene diisocyanate), bis(4-isocyanatocyclohexyl)methane (hydrogenated diphenylmethane diisocyanate), 1,4-diisocyanatocyclohexane and the oligomer thereof.

The aliphatic or alicyclic polyisocyanate is also preferably a compound having 3 or more isocyanate groups. Such isocyanate-functionalized compound is preferably an adduct of various polyisocyanates with polyols such as 2-methylpentane-2,4-diol and trimethylolpropane, such as an adduct of diisocyanate such as HDI, XDI, and IPDI with trimethylolpropane, and a trimer having an isocyanurate ring. As the polyisocyanate-modified product, a carbodiimide group, a uretdione group, a uretonimine group, a burette group reacted with water, a group of isocyanurate groups, or a modified product having two or more of these groups can be used.

In a preferred embodiment, the polyisocyanate is selected from IPDI, HDI, XDI, their adducts, their oligomers and the mixture of above. In a more preferred embodiment, the polyisocyanate is selected from IPDI, HDI, their oligomers and combination thereof. In a most preferred embodiment, the polyisocyanate is IPDI commercially available from e.g. Sigma Aldrich.

In one embodiment, the polyisocyanate is present in the reactants of polyurethane polymer from 10 to 60 wt.%, preferably 20 to 50 wt.%, based on the total weight of the reactants of the polyurethane polymer.

The reactants may comprise other polyisocyanates such as aromatic polyisocyanates if excellent adhesion strength and debonding effect of the adhesive still can be achieved. In one embodiment, the reactants essentially comprise no aromatic polyisocyanates, such as MDI. In one preferred embodiment, the reactants, based on the total weight of the reactants, comprise less than 25% by weight of, or less than 10% by weight of, or less than 5% by weight of, or less than 1% by weight of, or comprise no aromatic polyisocyanates, such as MDI.

### Polyether polyol

To prepare the polyurethane polymer, the selected polyisocyanate reacts with a mixture of isocyanate-reactive compounds. The mixture of isocyanate-reactive compounds comprises a polyether polyol.

The polyether polyol is preferably a polyether diol which comprises primary hydroxyl groups or a mixture of primary and secondary hydroxyl groups. Examples of suitable polyether polyols are polyoxyalkylene polyols such as polyethylene glycol, polypropylene glycol, polytetramethyl glycol and polybutyl glycol. Also, homopolymers or copolymers of the listed polyoxyalkylene polyols as well as mixtures thereof are suitable for the purpose of the present invention. Particularly suitable copolymers are those comprising an adduct of a compound selected from the group consisting of ethylene glycol, propylene glycol, diethylene glycol, propylene glycol, triethylene glycol, 2-ethylhexandiol-1,3-glycerine, trimethylolpropane, trimethylolethane, tris(hydroxyphenyl)propane, triethanolamine and triisopropylamine with at least one compound selected from the group consisting of ethylene oxide, propylene oxide and butylene oxide. In one embodiment, the polyether polyol is selected from polyethylene glycol, polypropylene glycol, polytetramethyl glycol, polybutyl glycol, and combination thereof, and preferably is polyethylene glycol.

According to the present invention, the polyether polyol may have a number averaged molecular weight from larger than 200 to less than 1000. If the molecular weight of the polyether polyol is lower or higher than the above range, the speed of reaction with polyisocyanate will be significantly slower. In one embodiment, the polyether polyol has a number averaged molecular weight (Mn) from 250 to 950 g/mol, and preferably from 300 to 800 g/mol. Such polyether polyol is commercially available from e.g. OQEMA.

In one embodiment, the polyisocyanate is present in the reactants of polyurethane polymer from 10 to 60 wt.%, preferably 15 to 50 wt.%, based on the total weight of the reactants of the polyurethane polymer.

### Amine of Formula (1)

The mixture of isocyanate-reactive compounds further comprises an amine represented by Formula (1) 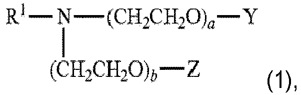 wherein R¹ is C₁₋₃ alkyl, such as methyl, ethyl, propyl, Y is hydrogen, Z is C₁₋₃ alkyl or hydrogen, a is an integer of 1 to 5, and b is an integer of 0 to 5.

In one embodiment, R¹ = Z, a is 1, and b is 0. In another embodiment, Z is hydrogen, a is 1 and b is 1.

Preferably, the amine of Formula (1) is selected from N-methylethanolamine, N-ethylethanolamine, N-propylethanolamine, N,N-dimethylethanolamine, N,N-diethylethanolamine, N,N-dipropylethanolamine, N-methyldiethanolamine, N-ethyldiethanolamine, N-propyldiethanolamine, and combination thereof, preferably is selected from N-methyldiethanolamine, N-ethyldiethanolamine, N-propyldiethanolamine, and combination thereof, and more preferably is N-methyldiethanolamine, commercially available from e.g. Sigma Aldrich.

In one embodiment, the amine is present in the reactants of polyurethane polymer from 1 to 20 wt.%, preferably 1.5 to 8 wt.%, based on the total weight of the reactants of the polyurethane polymer. If the amount of amine is lower than the range, the bonding strength of the cured adhesive may not be sufficient to use for flexible packaging application.

Albeit it is not preferred, the mixture of isocyanate-reactive compounds may contain other isocyanate-reactive compounds such as other polyols and/or other amines if the adhesion properties and debonding effect of the adhesive still can be achieved. In one embodiment, the mixture of isocyanate-reactive compounds may contain less than 10% by weight, or less than 5% by weight, or less than 1% by weight of polyester polyol, and preferably essentially contains no, and more preferably contains no polyester polyol. In another embodiment, the mixture of isocyanate-reactive compounds may contain less than 1% by weight, or less than 0.5% by weight of N-butyldiethanolamine and/or diethanolamine. In one preferred embodiment, the mixture of isocyanate-reactive compounds essentially comprises no N-butyldiethanolamine and/or diethanolamine, and more preferably comprise no N-butyldiethanolamine and/or diethanolamine.

The adhesive composition according to the present invention is organic solvent based, and contains an organic solvent. Examples of organic solvents include heterocyclic, aliphatic, or aromatic hydrocarbons such as toluene, isophorone, xylene, mono- or polyhydric alcohols such as ethylhexanol, butoxypropanol, isopropanol, butyl diglycol, methanol, ethanol, propanol, and butanol, ethers such as diethylene glycol dimethyl ether and dipropylene glycol methyl ether, ethyl glycol and butyl glycol, esters such as ethyl acetate, butyl acetate, pentyl acetate, or ethyl ethoxypropionate, ketones such as cyclohexanone, methyl ethyl ketone (MEK), methyl amyl ketone, methyl isobutyl ketone (MIBK), and acetone, and amides, such as N-methylpyrrolidone, N-ethylpyrrolidone, and dimethylformamide. In one embodiment, the organic solvent is ethyl acetate and/or ethanol.

The organic solvent is present in the adhesive composition in an amount of 5 to 80% by weight, preferably 10 to 70% by weight of the total weight of the adhesive composition.

The adhesive composition according to the present invention is thus organic solvent-based. Water may be contained in the adhesive composition if it is compatible with the organic solvent, but the amount of water is limited. In one embodiment, the adhesive composition comprises essentially no water, preferably comprises no more than 5 wt%, more preferably no more than 1 wt%, and in particular no more than 0.5 wt% of water based on the total weight of the adhesive composition. In one preferred embodiment, the adhesive composition comprises no water.

The composition according to the invention may further comprise additives. These additives may be used to affect the properties of the composition, for example the mechanical properties and debonding effect. Preferably the one or more additives are selected from the group consisting of catalysts, fillers, pigments, rheology modifiers, drying agents, flame retardants, curing agents, adhesion promoters, surface active agents and anti-foaming agents.

Examples of the catalyst include tertiary amine compounds and organometallic compounds.

Examples of the tertiary amine compound include triethylamine, triethylenediamine, N, N-dimethylbenzylamine, N-methylmorpholine, diazabicycloundecene (also known as DBU), and the like.

Examples of the organometallic compound include a tin compound and a non-tin compound.

Examples of the tin compound include dibutyltin dichloride, dibutyltin oxide, dibutyltin dibromide, dibutyltin dimaleate, dibutyltin dilaurate (DBTDL), dibutyltin diacetate, dibutyltin sulfide, tributyltin sulfide, tributyltin oxide, Examples include tributyltin acetate, triethyltin ethoxide, tributyltin ethoxide, dioctyltin oxide, tributyltin chloride, tributyltin trichloroacetate, and tin 2-ethylhexanoate.

Examples of non-tin compounds include titanium compounds such as dibutyltitanium dichloride, tetrabutyltitanate, and butoxytitanium trichloride, lead compounds such as lead oleate, lead 2-ethylhexanoate, lead benzoate, and lead naphthenate, iron compounds such as iron ethylhexanoate and iron 2,4-pentadionate, cobalt compounds such as cobalt benzoate and cobalt 2-ethylhexanoate, zinc compounds such as zinc naphthenate and zinc 2-ethylhexanoate and zirconium naphthenate.

Among these, diazabicycloundecene (DBU), dibutyltin dilaurate (DBTDL), zinc 2-ethylhexanoate and the like are preferable in terms of reactivity.

The catalyst can be used alone or in combination of two or more.

The NCO/OH ratio of the polyisocyanate, the mixture of isocyanate-reactive compounds, and optional NCO-containing curing agent is the range of 0.8 to 1.2.

The polyurethane polymer usually has an NCO content of from 0 to 5 wt.% (determined according to Spielberger, DIN EN ISO 11909:2007-05).

The preparation of the polyurethane polymer is known in the art, and may comprise the steps of (1) mixing the polyether polyol and optional additives in an organic solvent to homogeneity; (2) adding polyisocyanate and optional NCO-containing curing agent to react with the polyether polyol at 50°C to 80°C under stirring; (3) obtaining the polyurethane polymer.

The preparation of the solvent-based adhesive composition may comprise the steps of adding additional organic solvent in the polyurethane polymer to reach a solid content of 30 to 80% by weight.

According to the present invention, the adhesive composition may consist of one-component or multi-components.

In one embodiment, the adhesive composition is two-component composition consisting of a resin component, a curing component and an organic solvent. The resin component comprises a polyurethane polymer obtainable by the reactants comprising,
a) a polyisocyanate selected from an aliphatic polyisocyanate, alicyclic polyisocyanate and combination thereof; and
b) a mixture of isocyanate-reactive compounds comprising,
   b1) a polyether polyol; and
   b2) an amine represented by Formula (1) 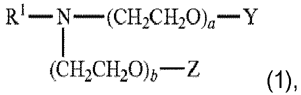
   wherein R¹ is C₁₋₃ alkyl, Y is hydrogen, Z is C₁₋₃ alkyl or hydrogen, a is an integer of 1 to 5, and b is an integer of 0 to 5.

The curing component comprises a curing agent which can react with the excess functional groups of the polyurethan polymer (prepolymer).

Examples of the curing agent can be those used for the aliphatic polyisocyanates and alicyclic polyisocyanates. Preferably, the curing agent hexamethylene diisocyanate (HDI) or derivatives thereof, such as HDI biuret (commercially available, for example, as Desmodur N3200), HDI trimer (commercially available as Desmodur N3300) or dicyclohexylmethane diisocyanate (commercially available as Desmodur W).

The adhesive composition of the present invention may comprise an adhesion promoter to increase the adhesion strength of the cured adhesive.

Adhesion promoters which may be present are the adhesion promoters known from the prior art, in particular aminosilanes, in the composition according to the invention. As an adhesion promoter may preferably alkoxysilyl group-bearing compounds which additionally have primary or secondary amino groups, vinyl groups, thiol groups, aryl groups, or alternatively oxirane groups such as 3-aminopropyltrimethoxysilane, N-(2-aminoethyl)-3-aminopropyltrimethoxysilane, N-(n-butyl) aminopropyltrimethoxysilane, 3-mercaptopropyl trimethoxysilane, 3-glycidyloxy-propyltriethoxysilane, 3-glycidyloxypropyltrimethoxysilane, phenyltrimethoxysilane or oligomeric amino / alkyl-alkoxysilanes, each used alone or in admixture.

The present invention is also directed to the cured adhesive obtainable by curing an adhesive composition according to the present invention.

Surprisingly, the inventors have found that the adhesive compositions of the present invention exhibit excellent adhesive strength on substrates for flexible packaging, meanwhile possess debonding property when treated under mild conditions such as under water or aqueous solution such as water/ethanol solution at atmospheric conditions.

In one preferred embodiment, the cured adhesive has a bonding strength on a polyethylene substrate of no less than 1 N/15mm, and preferably no less than 1.5 N/15mm measured according to DIN 53357.

In another preferred embodiment, the cured adhesive on a polyethylene substrate is soluble or dispensable in water or an aqueous solution such as an aqueous solution containing ethanol (water/ethanol solution) under atmospheric conditions.

In another aspect, the present invention is directed to a flexible packaging material comprising a first layer comprised of a first polyolefin or first polyester; a second layer comprised of a second polyolefin, which may be the same or different from the first polyolefin, a second polyester, which may be the same as or different from the first polyester, or a metal foil; and cured adhesive of the present invention bonding the first layer to the second layer.

In yet another aspect, the present invention is directed to a method of making a flexible film laminate, comprising: combining the components of polyurethane adhesive system according to the present invention at a predetermined weight ratio to form an adhesive mixture; disposing the adhesive mixture on at least a portion of one surface of a first flexible film, joining the first flexible film and a second flexible film wherein the adhesive mixture is interposed between the first flexible film and the second flexible film; and curing the adhesive mixture.

The film or films to be coated and adhered to each other using the adhesive compositions may be comprised of any of the materials known in the art to be suitable for use in flexible packaging, including both polymeric and metallic materials as well as paper (including treated or coated paper). Thermoplastics are particularly preferred for use as at least one of the layers. The materials chosen for individual layers in a laminate are selected to achieve specific desired combinations of properties, e.g., mechanical strength, tear resistance, elongation, puncture resistance, flexibility/stiffness, gas and water vapor permeability, oil and grease permeability, heat sealability, adhesiveness, optical properties (e.g., clear, translucent, opaque), formability, merchantability and relative cost. Individual layers may be pure polymers or blends of different polymers. The polymeric layers are often formulated with colorants, anti-slip, anti-block, and anti-static processing aids, plasticizers, lubricants, fillers, stabilizers and the like to enhance certain layer characteristics.

Particularly preferred polymers for use include, but not limited to, polyethylene (including low density polyethylene (LDPE), medium density polyethylene (MDPE), high density polyethylene (HPDE), high molecular weight, high density polyethylene (HMW-HDPE), linear low density polyethylene (LLDPE), linear medium density polyethylene (LMPE)), polypropylene (PP), oriented polypropylene, polyesters such as poly (ethylene terephthalate) (PET) and poly (butylene terephthalate) (PBT), ethylene-vinyl acetate copolymers (EVA), ethylene-acrylic acid copolymers (EAA), ethylene-methyl methacrylate copolymers (EMA), ethylene-methacrylic acid salts (ionomers), hydrolyzed ethylene-vinyl acetate copolymers (EVOH), polyamides (nylon), polyvinyl chloride (PVC), poly(vinylidene chloride) copolymers (PVDC), polybutylene, ethylene-propylene copolymers, polycarbonates (PC), polystyrene (PS), styrene copolymers, high impact polystyrene (HIPS), acrylonitrile-butadienestyrene polymers (ABS), acrylonitrile copolymers (AN), polyamide (Nylon), polylactic acid (PLA), regenerated cellulose films (Cellophane).

The polymer surface may be treated or coated, if so desired. For example, a film of polymer may be metallized by depositing a thin metal vapor such as aluminum onto the film's surface. Metallization may enhance the barrier properties of the finished laminate. The polymer film surface may also be coated with anti-fog additive or the like or subjected to a pretreatment with electrical or corona discharges, or ozone or other chemical agents to increase its adhesive receptivity. A coating of an inorganic oxide such as SiOx or AlOx may also be present on the polymer surface (for example, an SiOx- or AlOx-coated PET film).

One or more layers of the laminate may also comprise a metal film or foil, such as aluminum foil, or the like. The metal foil will preferably have a thickness of about 5 to 100 µm.

The individual films comprising the laminates can be prepared in widely varying thicknesses, for example, from about 5 to about 200 microns. The films, foils, and laminating adhesive composition can be assembled into the laminate by using any one or more of the several conventional procedures known in the art for such purpose. For instance, the adhesive formulation may be applied to the surface of one or both of two films/foils by means of extrusion, brushes, rollers, blades, spraying or the like and the film/foil surfaces bearing the adhesive composition brought together and passed through a set of rollers (often referred to as nip rollers) which press together the film/foils having the adhesive composition between the films/foils. The resulting laminate may be rolled or wound onto a reel for ageing. The adhesive may be applied by conventional techniques; e.g., a 3/4-roller coating mechanism in the case of the use of a solvent-free system, or a 2-roller coating mechanism in the case of the use of a solvent-containing system.

The coating weight at which the adhesive formulation can be applied to the surface of a film layer is in the range of about 0.1 to about 10 g/m², and more typically about 2.0 to about 6.0 g/m².

Generally speaking, the adhesive compositions are believed to be largely chemically cured through the evaporation of the organic solvent, or the reaction of the formulation constituents containing isocyanate groups and the constituents containing hydroxyl or other active hydrogen groups. However, curing can also be accomplished at least in part through moisture curing. Although sufficient moisture may be inherently present on the film or foil surfaces for this purpose, water may also be deliberately introduced through conventional methods if so desired.

Laminates prepared in accordance with the present disclosure may be used for packaging purposes in the same manner as conventional or known flexible laminated packaging films. The laminates are particularly suitable for forming into flexible pouch-shaped container vessels capable of being filed with a foodstuff and sealed. For example, two rectangular or square sheets of the laminate may be piled in the desired configuration or arrangement; preferably, the two layers of the two sheets which face each other are capable of being heat-sealed to each other. Three peripheral portions of the piled assembly are then heat-sealed to form the pouch. Heat-sealing can easily be accomplished by means of a heating bar, heating knife, heating wire, impulse sealer, ultrasonic sealer, or induction heating sealer.

An embodiment of the food packaging film according to the present invention is exemplified in FIG. 1, but the present invention is not limited to these embodiments. FIG. 1 shows a sectional view of a food packaging film 10. This food packaging film 10 is a laminate comprising one metal foil 14 and two plastic films 12 and 13, and the plastic films 12 and 13 are adhered on both sides of the metal foil 14 by using adhesive layers 11, respectively. More specifically, the plastic film 12 is preferably, for example, a polyethylene terephthalate (PET) film, the film 13 is preferably a polyolefin film, more preferably a PE film. The metal foil 14 is inserted between them. The metal foil 14 may be, for example, an aluminum foil. The film 12 is bonded to the metal foil 14, and the film 13 is bonded to the metal foil 14 by the adhesive layers 11 for food packaging films, respectively. Examples Of the film to be laminated include plastic films produced from polyethylene terephthalates, nylons, polyethylenes, polypropylenes, and polyvinyl chlorides; metal foils such as aluminum foil; deposited films such as metal deposited films and silica deposited films; metal films produced from stainless steel, steel, copper, and lead. Moreover, the thickness of the film to be laminated, for example, plastic film is preferably within a range of 5 to 200 µm.

The present invention also relates to a method of recycling a flexible packaging material comprising,
a) providing a flexible packaging material of the present invention,
b) treating the flexible packaging material with a treating agent selected from water or an aqueous solution such as water/ethanol solution under atmospheric conditions for 1 to 24 hours, and
c) obtaining the debonded first and second layers.

In step b), the treating agent is preferably water as no additional washing step is necessary for cycling the flexible packaging material.

The invention will be illustrated in more detail by way of the following examples which are not to be understood as limiting the concept of the invention.

### Examples

### Materials

IPDI was obtained from Sigma Aldrich.
4,4'-MDI was obtained from Covestro.
Diethylene glycol was obtained from OQEMA.
PEG 400 is a polyethylene glycol having a Mn of around 400 g/mol, obtained from OQEMA.
MDEA is N-methyldiethanolamine obtained from Sigma Aldrich.
N-butyldiethanolamine was obtained from Sigma Aldrich.
Polyester 231 is a polyester polyol produced from isophthalic acid, adipic acid and diethylene glycol, obtained from Aliancys.
HDI biuret was obtained from Covestro.
Bis-AMEO is bis(triethoxysilylpropyl)amine obtained from Evonik.
Ethanol and ethyl acetate were obtained from Sigma Aldrich.

### Examples 1 and 2 and comparative examples 1 to 6 (one-component adhesive compositions)

In a 250 mL three neck flask with a stirrer, thermometer and a cooler, the polyol and/or amine and ethyl acetate according to the formulations in Table 1 were added to the flask. After stirring until the mixture became homogeneous, the isocyanate(s) according to the formulations in Table 1 were added. The reaction was carried out at 70°C with a stirring speed of 200 rpm. To determine the completion of the reaction, FTIR (Perkin Elmer Spectrum Two) measurements were made. The reaction was regarded as complete, if no -NCO group signal (at about 2265 cm⁻¹) could be observed in the FTIR spectrum. If the reaction was completed, the batch was cooled to at least 50°C before the batch was filled into proper glass container for storage.

### Testing methods

The reaction products in the examples were observed and tested in the following testing methods. The testing results are shown in Table 1.

### Product appearance

The appearance of the polyurethane reaction product was visually observed if it was liquid, viscous liquid or gel when the batch product was cooled to at least 50°C.

### Reaction speed

The reaction speed of producing the polyurethane was evaluated as good if the synthesis was completed within 24 hours. Otherwise, it would be evaluated as poor.

### Viscosity

The polyurethane reaction products were kept in a water bath at 20°C before the viscosity measurement started. For the measurements Brookfield Viscosimeter DV-II Pro Extra was used. Depending on the viscosity different spindles were used for the measurement to ensure that the torque of the device was between 20% to 80%.

### Solubility in solvent

For a lamination the produced adhesive was diluted in ethyl acetate or ethanol to lower the viscosity in order to ensure a proper spreading of the adhesive on the foils. The solubility was evaluated as good if the adhesive could be easily dissolved in the solvent. If a phase separation in the solvent was occurred, it would be evaluated as poor.

### Bonding strength

A prepared carrier foil (e.g. aluminium foil; DIN A4 size) is placed on a glass plate and was fixed with a clamp. A scraper was placed on top of the foil. Below the scraper, a couple of drops of each adhesive compositions in the examples were added. To create a thin and homogeneous layer of the adhesive composition on the carrier foil, the scraper was pulled from the top of the foil to the bottom of it. Then the solvent was evaporated in an oven for 5 minutes at 90°C. After the evaporation the foil was cooled down for several seconds before the foils was placed on a laminator where the second foil was laminated against the carrier foil. For the lamination a pressure of 4 bar, a lamination speed of 10 m/min and a roller temperature of 60°C were used to produce a laminate sample.

For the measurement of the bonding strength of the adhesives, the laminates were cut in stripes with a defined width of 15 mm. A therefore prepared sample cutter was used to maintain the same width for all samples. The sample was separated on one side, afterwards the sample was clamped into a Zwick or Instron testing machine and the force for the separation of both foils was measured.

### Debonding property

Forthis testing method three 15x20 mm samples were cut out of the laminates. These three samples were added to debonding solution (20 g) which is either water or a water/ethanol mixture. The solution was neither stirred nor heated. The solution was just standing on a desk with the foils in it. The change of the samples in the debonding solution was observed and evaluated.

"Good" means that the debonding was completely possible, and the foils separated completely from each other during the observation (at least 1 week). "Fair" means that the foils separated on the edges of the samples, but not in the middle of the samples during the observation (at least 1 week). "Poor" means at least one edge of the samples was not separated during the observation (at least 1 week).

**Table 1: Formulations of examples and testing results**

| | Example 1 | Example 2 | Comparative Example 1 | Comparative Example 2 |
|---|---|---|---|---|
| PEG 400 (wt.%) | 24.88 | 32.58 | 25.45 | 23.84 |
| MDEA (wt.%) | 7.42 | 3.24 | - | - |
| Diethanolamine (wt.%) | - | - | 13.28 | - |
| N-Butyldiethanolamine (wt.%) | - | - | - | 9.62 |
| IPDI (wt.%) | 27.7 | 24.18 | 28.11 | 26.54 |
| 4,4'-MDI (wt.%) | - | - | - | - |
| Ethylacetate (wt.%) | 40 | 40 | 40 | 40 |
| Product appearance | Liquid | Liquid | Gel | Liquid |
| Reaction speed | Good | Good | Good | Good |
| Viscosity [mPa·s] | 2819 | 3934 | N.A. | 4521 |
| Solubility in solvent | Good | Good | Poor | Good |
| Bond strength (N/15mm) | 1.78 | 1.79 | N.A. | 1.71 |
| Debonding property | Good | Good | N.A. | Fair |

| | Comparative Example 3 | Comparative Example 4 | Comparative Example 5 | Comparative Example 6 |
|---|---|---|---|---|
| PEG 400 (wt.%) | 23.52 | 38.55 | - | - |
| MDEA (wt.%) | 7.02 | - | 20.94 | - |
| N-Butyldietha nolamine (wt.%) | - | - | - | - |
| IPDI (wt.%) | - | 21.45 | 39.06 | 10.73 |
| Polyester 231 (wt.%) | - | - | - | 49.27 |
| 4,4'-MDI (wt.%) | 29.46 | - | - | - |
| Ethylacetate (wt.%) | 40 | 40 | 40 | 40 |
| Product appearance | Gel | Liquid | Viscous Liquid | Viscous Liquid |
| Reaction speed | - | Good | Good | Poor |
| Viscosity (mPa·s) | - | 2819 | 135000 | 92180 |
| Solubility in solvent | Poor | Good | Poor | Poor |
| Bonding strength (N/15mm) | N.A. | 0.57 | N.A. | N.A. |
| Debonding property | N.A. | N.A. | N.A. | N.A. |

### Example 3 (two-component adhesive composition)

The two-component adhesive composition consists of a polyurethane resin component and a curing component.

The polyurethane resin component was prepared as follows. In a 250 mL three neck flask with a stirrer, thermometer and a cooler, 32.58 parts by weight of PEG 400, 3.24 parts by weight of MDEA and 81.49 parts by weight of ethyl acetate were added to the flask. After stirring until the mixture became homogeneous, 48.54 parts by weight of IPDI were added. The reaction was carried out at 70°C with a stirring speed of 200 rpm. To determine the completion of the reaction, FTIR (Perkin Elmer Spectrum Two) measurements were made. The reaction was regarded as complete, if no - NCO group signal (at about 2265 cm⁻¹) could be observed in the FTIR spectrum. If the reaction was completed, the batch was cooled to at least 50°C before the batch was filled into proper glass container for storage.

The curing component is a mixture of HDI-biuret (52.2 parts by weight), bis-AMEO (27.8 parts by weight) and ethyl acetate (20 parts by weight).

The resin component and the curing component were then mixed in a weight ratio of 16:1. The produced laminates needed to cure at 40°C due to the excess of isocyanates in the two-component adhesive system. After a standard curing time of 14 days, the samples for debonding property were prepared.

The debonding of the 2K adhesive was achieved in a water/ethanol mixture (1:1) in 24 hours. The other properties of the adhesive were good or fulfil the needs.

## Claims

1. A solvent-based polyurethane adhesive composition comprising,
1) a polyurethane obtainable by the reactants comprising,
a) a polyisocyanate selected from an aliphatic polyisocyanate, alicyclic polyisocyanate and combination thereof; and
b) a mixture of isocyanate-reactive compounds comprising,
b1) a polyether polyol; and
b2) an amine represented by Formula (1) 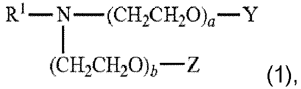 wherein R¹ is C₁₋₃ alkyl, Y is hydrogen, Z is C₁₋₃ alkyl or hydrogen, a is an integer of 1 to 5, and b is an integer of 0 to 5; and
2) an organic solvent.

2. The adhesive composition according to claim 1, wherein the polyisocyanate is selected from 1,6-hexamethylene diisocyanate (HDI), isophorone diisocyanate (IPDI), xylyl diisocyanate (XDI), the adduct thereof, the oligomer thereof, and the mixture of above, and preferably is isophorone diisocyanate and/or its oligomer.

3. The adhesive composition according to claim 1 or 2, wherein the polyether polyol is selected from polyethylene glycol, polypropylene glycol, polytetramethyl glycol, polybutyl glycol, and combination thereof, and preferably is polyethylene glycol.

4. The adhesive composition according to any of claims 1 to 3, wherein the polyether polyol has a number averaged molecular weight from 200 to 1000 g/mol, and preferably from 300 to 800 g/mol.

5. The adhesive composition according to any of claims 1 to 4, wherein the amine is selected from N-methylethanolamine, N-ethylethanolamine, N-propylethanolamine, N,N-dimethylethanolamine, N,N-diethylethanolamine, N,N-dipropylethanolamine, N-methyldiethanolamine, N-ethyldiethanolamine, N-propyldiethanolamine, and combination thereof, preferably is selected from N-methyldiethanolamine, N-ethyldiethanolamine, N-propyldiethanolamine, and combination thereof, and more preferably is N-methyldiethanolamine.

6. The adhesive composition according to any of claims 1 to 5, wherein the organic solvent is selected from heterocyclic hydrocarbons, aliphatic hydrocarbons, aromatic hydrocarbons, mono alcohols, polyhydric alcohols, ethers, esters, ketones, amides, and combination thereof, and preferably is ethyl acetate.

7. The adhesive composition according to any of claims 1 to 6, wherein the mixture of isocyanate-reactive compounds essentially comprises no polyester polyol, and preferably comprises no polyester polyol.

8. The adhesive composition according to any of claims 1 to 7, wherein the mixture of isocyanate-reactive compounds essentially comprises no N-methyldiethanolamine and/or diethanolamine, and preferably comprise no N-methyldiethanolamine and/or diethanolamine.

9. The adhesive composition according to any of claims 1 to 8, wherein the reactants essentially comprise no aromatic polyisocyanates, and preferably comprise no aromatic polyisocyanates.

10. The adhesive composition according to any of claims 1 to 9, wherein the adhesive composition is one-component or multi-components.

11. A cured adhesive obtainable by curing an adhesive composition according to any of claims 1 to 10.

12. The cured adhesive according to claim 11, having bonding strength on a polyethylene substrate of no less than 1 N/15mm, and preferably no less than 1.5 N/15mm measured according to DIN 53357.

13. The cured adhesive according to claim 11, wherein the cured adhesive on a polyethylene substrate is soluble or dispensable in water or water/ethanol solution under atmospheric conditions.

14. A flexible packaging material comprising a first layer comprised of a first polyolefin or first polyester; a second layer comprised of a second polyolefin, which may be the same or different from the first polyolefin, a second polyester, which may be the same as or different from the first polyester, or a metal foil; and cured adhesive of any of claims 10 to 11 bonding the first layer to the second layer.

15. A method of recycling a flexible packaging material comprising,
a) providing a flexible packaging material according to claim 14,
b) treating the flexible packaging material with water or water/ethanol solution under atmospheric conditions for 1 to 24 hours, and
c) obtaining the debonded first and second layers.
